Europäisches Patentamt

European Patent Office

Office européen des brevets

(11) Numéro de publication : **0 484 770 B1**

# (12) FASCICULE DE BREVET EUROPEEN

(45) Date de publication du fascicule du brevet :
30.08.95 Bulletin 95/35

(51) Int. Cl.⁶ : **H02P 8/00, G04C 3/14**

(21) Numéro de dépôt : **91118275.6**

(22) Date de dépôt : **26.10.91**

(54) **Procédé de commande d'un moteur pas à pas et dispositif pour la mise en oeuvre de ce procédé.**

(30) Priorité : **07.11.90 FR 9013893**

(43) Date de publication de la demande :
**13.05.92 Bulletin 92/20**

(45) Mention de la délivrance du brevet :
**30.08.95 Bulletin 95/35**

(84) Etats contractants désignés :
**CH DE GB LI**

(56) Documents cités :
**EP-A- 0 057 663**
**EP-A- 0 137 093**
**EP-A- 0 253 153**
**EP-A- 0 253 153**

(73) Titulaire : **Eta SA Fabriques d'Ebauches**
**Schild-Rust-Strasse 17**
**CH-2540 Granges (CH)**

(72) Inventeur : **Daho, Taghezout**
**Avenue Dapples 12**
**CH-1006 Lausanne (CH)**

(74) Mandataire : **de Montmollin, Henri et al**
**ICB**
**Ingénieurs Conseils en Brevets SA**
**Rue des Sors 7**
**CH-2074 Marin (CH)**

## Description

La présente invention a pour objet un procédé de commande d'un moteur pas à pas ayant une bobine et un rotor comprenant un aimant permanent couplé magnétiquement à ladite bobine, ledit procédé comportant l'application d'une impulsion motrice à ladite bobine chaque fois que ledit rotor doit tourner d'un pas et la mesure de la quantité d'énergie mécanique fournie pas ledit moteur pendant ladite impulsion motrice ladite mesure étant basée sur une détermination de cette énergie mécanique à partir des valeurs de la tension et du courant appliqués à la bobine du moteur.

Elle a également pour objet un dispositif pour la mise en oeuvre de ce procédé.

La plupart des moteurs pas à pas utilisés actuellement dans des dispositifs de faibles dimensions tels que des pièces d'horlogerie sont commandés par des impulsions motrices ayant une durée fixe, suffisamment longue pour que le rotor de ces moteurs tourne d'un pas en réponse à chacune de ces impulsions même si le couple résistant appliqué à ce rotor est égal au couple maximum que peuvent fournir ces moteurs.

Cette manière de commander ces moteurs pas à pas est très simple et ne nécessite pas de moyens compliqués pour la mettre en oeuvre.

Mais lorsqu'un moteur pas à pas est commandé de cette manière, il consomme une grande quantité d'énergie électrique en pure perte, car, pendant la grande majorité des impulsions motrices, le couple résistant appliqué à son rotor est beaucoup plus faible que le couple maximal qu'il peut fournir.

En outre, la sécurité de fonctionnement d'un moteur pas à pas commandé de cette manière simple n'est pas très élevée, car les impulsions motrices qu'il reçoit peuvent dans certains cas provoquer une rotation de son rotor de plus d'un pas ou même provoquer le retour de ce rotor à sa position initiale.

Pour augmenter la durée de vie utile des piles qui fournissent l'énergie électrique nécessaire au fonctionnement des dispositifs mentionnés ci-dessus, on a proposé de nombreux procédés visant à réduire la quantité d'énergie électrique consommée par ces moteurs en mesurant indirectement, pendant chaque impulsion motrice, le couple résistant qui est appliqué à leur rotor et en interrompant cette impulsion motrice en dépendance de cette mesure.

Ainsi, par exemple, le brevet US-A-4 772 840 décrit un tel procédé de commande d'un moteur pas à pas. Selon ce procédé, l'énergie mécanique fournie par ce moteur est mesurée pendant chaque impulsion motrice, de même que le temps mis par cette énergie mécanique pour atteindre une valeur de référence, temps qui dépend du couple résistant appliqué au rotor de ce moteur pendant cette impulsion motrice.

La durée optimale de l'impulsion motrice est déterminée en fonction de ce temps mesuré, et cette impulsion motrice est interrompue à la fin de cette durée optimale.

Ce procédé permet théoriquement de réduire la quantité d'énergie électrique consommée par un moteur pas à pas jusqu'à la valeur la plus faible possible, quel que soit le couple résistant appliqué au rotor de ce moteur.

Ce procédé présente cependant l'inconvénient que la relation entre le temps mis par l'énergie mécanique fournie par le moteur pendant une impulsion motrice pour atteindre la valeur de référence et la durée optimale de cette impulsion motrice dépend des caractéristiques électriques et magnétiques de ce moteur.

Cette relation doit donc être déterminée expérimentalement pour chaque type de moteur, ce qui est une opération longue et coûteuse.

On sait d'autre part que le rotor des moteurs pas à pas est soumis à un couple de positionnement qui tend à le maintenir ou à le ramener dans l'une ou l'autre de ses positions de repos, ou d'équilibre stable, et que pendant chaque rotation qu'il effectue en réponse à une impulsion motrice, ce rotor passe par une position d'équilibre instable, située sensiblement à mi-chemin entre la position d'équilibre stable qu'il vient de quitter et celle à laquelle il doit arriver.

Or, lorsqu'un moteur pas à pas est commandé selon le procédé décrit ci-dessus, son rotor n'a parcouru, à la fin d'une impulsion motrice, que le tiers environ de la distance angulaire qui sépare sa position de repos initiale, qu'il vient de quitter, de sa position de repos finale, c'est-à-dire celle qu'il doit atteindre. Ce rotor n'a donc pas encore atteint la position d'équilibre instable située entre ces deux positions de repos, et le couple de positionnement qui lui est alors appliqué s'oppose à sa rotation et tend à le ramener à sa position initiale.

Normalement, l'énergie cinétique accumulée dans ce rotor à la fin d'une impulsion motrice suffit à vaincre ce couple de positionnement et à amener ce rotor au moins jusqu'à la position d'équilibre instable mentionnée ci-dessus, où ce couple de positionnement s'annule, change de sens et provoque la rotation du rotor jusqu'à sa position de repos finale.

Mais, si le couple résistant appliqué à ce rotor augmente brusquement, par suite d'un choc par exemple juste après la fin d'une impulsion motrice, il y a un grand risque que l'énergie cinétique de ce rotor soit insuffisante pour lui permettre d'atteindre sa position d'équilibre instable, et que ce rotor retourne donc à sa position de repos initiale.

De plus, les caractéristiques des divers composants des dispositifs destinés à commander ces moteurs en mettant en oeuvre ce procédé peuvent également être différentes d'un dispositif à l'autre et, pour chaque dispositif, peuvent aussi varier en fonction du temps et/ou des diverses influences auxquelles ce dispositif est soumis.

Ces variations peuvent avoir pour effet que le rotor d'un moteur commandé selon le procédé décrit ci-dessus ne tourne pas correctement en réponse à une impulsion motrice, même si le couple résistant appliqué au rotor pendant cette impulsion motrice et/ou après celle-ci est inférieur au couple maximum que le moteur peut fournir.

On voit donc que la sécurité de fonctionnement d'un moteur commandé selon le procédé ci-dessus n'est pas aussi élevée qu'on pourrait l'espérer.

Si l'on veut augmenter cette sécurité de fonctionnement, il est nécessaire de compléter les dispositifs de commande mettant en oeuvre ce procédé par un circuit capable de détecter la non-rotation éventuelle du rotor du moteur qui leur est relié et d'appliquer à ce moteur, suite à cette détection, des impulsions dites de rattrapage pendant lesquelles l'énergie électrique qui lui est fournie est au moins égale à celle qu'il doit recevoir pour que le couple qu'il fournit ait sa valeur maximale.

Ces impulsions de rattrapage ont cependant l'inconvénient que, dans certains cas, elles peuvent provoquer une rotation du rotor de ce moteur de plus d'un pas, ou même provoquer le retour de ce rotor à sa position de départ. Dans ces cas, la sécurité de fonctionnement du moteur n'est évidemment pas améliorée.

D'autre part, des progrès notables ont été faits dans la conception et la réalisation des moteurs pas à pas, des circuits électroniques qui les commandent et des sources, piles ou accumulateurs, qui fournissent à ces moteurs et à ces circuits l'énergie électrique nécessaire à leur fonctionnement. Il en découle qu'il n'est actuellement plus aussi important que dans le passé de réduire autant que possible la consommation des moteurs pas à pas lorsque ceux-ci sont utilisés dans des dispositifs dont les dimensions sont très limitées tels que des montres-bracelets électroniques.

Un but de la présente invention est donc de proposer un procédé de commande d'un moteur pas à pas comportant l'application à la bobine de ce moteur d'une impulsion motrice chaque fois que son rotor doit tourner d'un pas et la mesure de la quantité d'énergie mécanique fournie par ce moteur pendant cette impulsion motrice, procédé grâce auquel la sécurité de fonctionnement du moteur est nettement plus grande que lorsque ce moteur est commandé selon l'un des procédés connus, et grâce auquel la consommation d'énergie électrique de ce moteur n'est pas beaucoup plus importante que lorsque celui-ci est commandé selon le procédé décrit dans le brevet US-A-4 772 840 déjà mentionné.

Ce but est atteint par le procédé selon la présente invention, qui est caractérisé par le fait qu'il comporte la détection, pendant chaque impulsion motrice, de l'instant où la quantité d'énergie mécanique fournie par le moteur passe par sa valeur maximale et commence à diminuer et l'interruption de cette impulsion motrice à cet instant.

Un autre but de la présente invention est de proposer un dispositif de commande d'un moteur pas à pas comportant des moyens pour appliquer une impulsion motrice à la bobine de ce moteur chaque fois que son rotor doit tourner d'un pas et des moyens pour mesurer la quantité d'énergie mécanique fournie par ce moteur pendant cette impulsion motrice, ladite mesure étant basée sur une détermination de cette énergie mécanique à partir des valeurs de la tension et du courant appliqués à la bobine du moteur. Grâce à ce dispositif la sécurité de fonctionnement de ce moteur est nettement plus grande que lorsque ce moteur est commandé par l'un des dispositifs connus, et la consommation d'énergie électrique de ce moteur n'est pas sensiblement plus importante que lorsqu'il est commandé par un dispositif tel que celui qui est décrit dans le brevet US-A-4 772 840 déjà mentionné.

Ce but est atteint par le dispositif selon la présente invention, qui est caractérisé par le fait qu'il comporte des moyens pour détecter, pendant chaque impulsion motrice, le passage de l'énergie mécanique fournie par le moteur par sa valeur maximale et commence à diminuer, et des moyens pour interrompre l'impulsion motrice en réponse à cette détection.

La présente invention, ainsi que d'autres de ses buts et avantages, sera mieux comprise à la lecture de la description qui va suivre et qui sera faite en se référant au dessin annexé dans lequel :
- la figure 1 représente schématiquement une forme d'exécution du dispositif selon l'invention;
- la figure 2 est un diagramme représentant des signaux mesurés en divers points du schéma de la figure 1;
- la figure 3 est un diagramme représentant la variation de l'énergie mécanique fournie par un moteur pas à pas pendant une impulsion motrice; et
- les figures 4, 5 et 6 représentent schématiquement et partiellement d'autres formes d'exécution du dispositif selon l'invention.

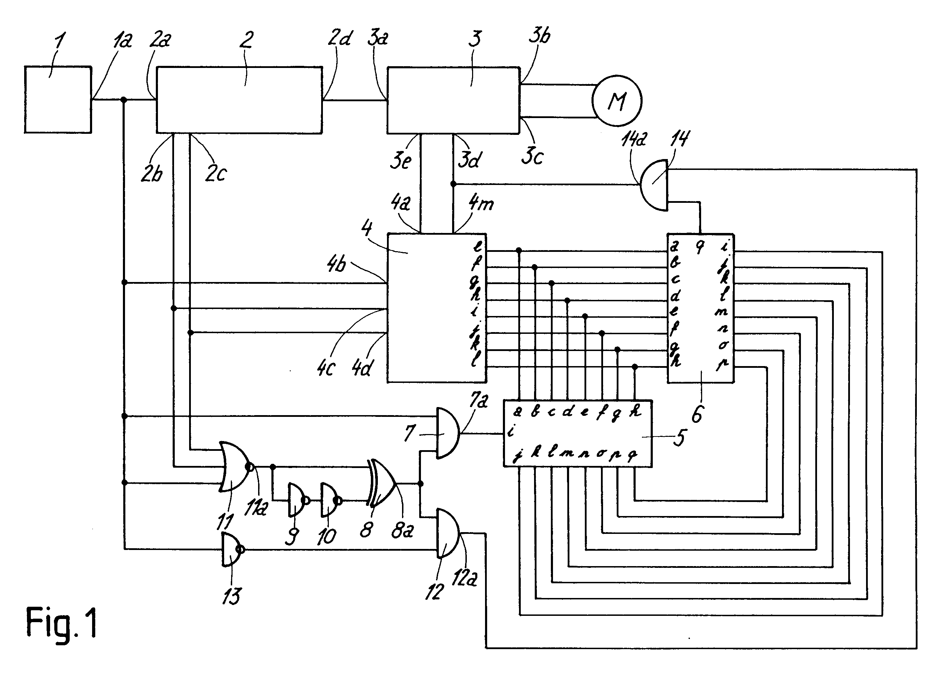

Le dispositif selon l'invention représenté schématiquement à la figure 1 à titre d'exemple non limitatif est

3

destiné à commander le moteur pas à pas d'une pièce d'horlogerie électronique.

Ce moteur, qui est également représenté schématiquement à la figure 1 dans laquelle il est désigné par la référence M, ne sera pas décrit ici car il peut être de l'un quelconque des divers types de moteurs bien connus qui sont notamment utilisés dans les pièces d'horlogerie électroniques.

On mentionnera simplement que ces moteurs comportent un rotor comprennant un aimant permanent qui est généralement bipolaire mais qui peut également être multipolaire, et au moins une bobine couplée magnétiquement à cet aimant permanent. Ces moteurs comportent en outre des moyens, qui peuvent être de diverses natures, destinés à appliquer à leur rotor un couple de positionnement, c'est-à-dire un couple qui tend à maintenir ou à ramener ce rotor dans l'une ou l'autre d'un certain nombre de positions de repos.

Le dispositif de la figure 1 comporte de manière classique un oscillateur 1 dont la sortie 1a est reliée à l'entrée 2a d'un circuit diviseur de fréquence 2. Cet oscillateur 1 et ce circuit diviseur 2 ne seront pas non plus décrits ici car ils peuvent être de n'importe lequel des divers types d'oscillateurs et de circuits diviseurs qui sont bien connus des spécialistes.

On mentionnera simplement que la sortie 1a de l'oscillateur 1 délivre un signal logique périodique, c'est-à-dire un signal ayant l'état logique "0" pendant une partie, par exemple la moitié, de sa période, et l'état logique "1" pendant le reste de cette période. Ce signal logique, qui sera appelé signal 1a dans la suite de cette description, a dans cet exemple une fréquence de 32768 Hz comme dans la plupart des pièces d'horlogerie électroniques disponibles actuellement.

On mentionnera également que le circuit diviseur 2 comporte trois sorties, 2b, 2c et 2d qui délivrent chacune un signal logique périodique. Ces signaux, qui seront respectivement appelés signal 2b, signal 2c et signal 2d dans la suite de cette description, ont des fréquences de 16384 Hz, 8192 Hz et 1 Hz.

Le signal 2d est appliqué à l'entrée 3a d'un circuit formateur d'impulsions motrices 3 qui comporte deux sorties 3b et 3c reliées chacune à l'une des bornes de la bobine du moteur M, bobine qui n'a pas été représentée séparément dans cette figure 1.

Ce circuit formateur 3 ne sera pas décrit en détail ici, car sa conception est à la portée de l'homme du métier et dépend, entre autres, de la nature des impulsions motrices qu'il doit fournir au moteur M. On sait en effet que, dans certains cas, un moteur pas à pas tel que le moteur M doit être commandé par des impulsions motrices dites "à tension constante", c'est-à-dire pendant lesquelles la bobine de ce moteur est reliée en permanence à une source fournissant sous une tension constante l'énergie électrique nécessaire à son fonctionnement. On sait également que, dans d'autres cas, un tel moteur pas à pas doit être commandé par des impulsions dites "hachées", c'est-à-dire pendant lesquelles la liaison de sa bobine avec cette source est alternativement établie et interrompue.

On sait aussi que, dans d'autres cas encore, un tel moteur pas à pas doit être commandé par des impulsions motrices dites "à courant constant" pendant lesquelles le courant qui traverse sa bobine est maintenu à une valeur à peu près constante.

On connaît encore des cas où un tel moteur pas à pas est commandé par des impulsions motrices ayant l'un des genres ci-dessus pendant une partie de leur durée et un autre de ces genres pendant le reste de cette durée.

Dans tous les cas, ces impulsions motrices ont des polarités alternées, c'est-à-dire que chaque impulsion motrice a la polarité inverse de celle qui la précède et de celle qui la suit.

On mentionnera également que, quelle que soit la nature des impulsions motrices qu'il doit fournir au moteur M, le circuit formateur 3 est agencé de manière qu'il commence à produire une telle impulsion motrice chaque fois que le signal 2d passe de l'état logique "0" à l'état logique "1", c'est-à-dire une fois par seconde dans le présent exemple.

On mentionnera encore que ce circuit formateur 3 comporte une entrée 3d, et qu'il est en outre agencé de manière à interrompre chaque impulsion motrice en réponse au passage de l'état logique "0" à l'état logique "1" d'un signal d'interruption appliqué à cette entrée 3d par un circuit qui sera décrit plus loin.

Enfin, le circuit formateur 3 comporte une sortie 3e qui délivre un signal dont la nature et le rôle seront décrits plus loin.

Le dispositif de la figure 1 comporte encore un circuit de mesure 4 de l'énergie mécanique fournie par le moteur M pendant chaque impulsion motrice qui lui est appliquée par le circuit formateur 3.

Ce circuit de mesure 4 ne sera pas décrit en détail ici, car il peut être réalisé de plusieurs manières par l'homme du métier sur la base de l'équation suivante, qui est bien connue :

$$Em(t) = \int_0^t u(t) \cdot i(t)dt - \int_0^t R[i(t)]^2 dt - 0,5\, L[i(t)]^2$$

dans laquelle :
- Em(t) est l'énergie mécanique fournie par le moteur M depuis le début d'une impulsion motrice jusqu'au temps t,
- u(t) est la tension appliquée à la bobine de ce moteur M,
- i(t) est le courant circulant dans cette bobine, et
- R et L sont respectivement la résistance et l'inductance de cette bobine.

Pour prendre un exemple concret, on admettra que le circuit de mesure 4 du dispositif de la figure 1 est semblable à celui qui est décrit dans le brevet US-A-4 772 840 et qui est constitué par les composants désignés par les références 8 et 10 à 15 dans la figure 1 de ce brevet.

Ce circuit ne sera pas décrit à nouveau ici. On mentionnera cependant qu'il est adapté au cas particulier où le circuit formateur d'impulsions motrices du dispositif, c'est-à-dire le circuit 3 de la figure 1, est semblable à celui qui est également décrit dans le brevet US-A-4 772 840 et qui est constitué par les composants désignés par les références 1, 5 à 7 et 9 dans la figure 1 de ce brevet.

Comme cela ressort du texte de ce brevet US-A-4 772 840, ce circuit formateur est agencé de manière que, pendant chaque impulsion motrice qu'il applique au moteur auquel il est relié, la bobine de ce dernier est alternativement reliée à une source d'alimentation et mise en court-circuit selon que le courant passant dans cette bobine est inférieur ou supérieur à un courant de référence. Ce courant passant dans cette bobine est donc sensiblement constant pendant la plus grande partie de chaque impulsion motrice. En outre, ce circuit formateur comporte une sortie, constituée par la sortie Q de son flip-flop 9, qui délivre un signal logique ayant l'état "0" lorsque la bobine du moteur relié à ce circuit est court-circuitée et l'état "1" lorsque cette bobine est reliée à la source d'alimentation du dispositif.

Ce signal est celui qui est délivré par la sortie 3e du circuit formateur 3 du présent dispositif.

Comme celui qui est décrit dans le brevet US-A-4 772 840, le circuit de mesure 4 comporte une entrée, désignée par la référence 4a et reliée à la sortie 3e du circuit formateur 3, qui reçoit le signal qui vient d'être décrit. En outre, ce circuit 4 comporte trois entrées, désignées par les références 4b, 4c et 4d, qui reçoivent des signaux logiques périodiques ayant respectivement des fréquences de 32768 Hz, 16384 Hz et 8192 Hz. Dans le présent exemple, ces signaux sont respectivement produits par la sortie 1a de l'oscillateur 1 et par les sorties 2b et 2c du diviseur 2.

Le circuit de mesure 4 comporte encore huit sorties, désignées par les références 4e à 4l, qui correspondent aux sorties 8d à 8k du compteur 8 décrit dans le brevet US-A-4 772 840, et il est agencé de manière que, pendant chaque impulsion motrice, le nombre binaire formé par les états logiques de ces sorties 4e à 4l prenne une nouvelle valeur à chaque instant où le signal 2c passe de l'état "1" à l'état "0", et que cette nouvelle valeur soit proportionnelle à l'énergie mécanique fournie par le moteur M depuis le début de cette impulsion motrice. Dans la suite de cette description, ce nombre binaire sera appelé nombre N, et chacun des instants où il prend une nouvelle valeur sera appelé instant $t_1$.

Enfin, le circuit 4 comporte une entrée 4m, qui correspond à l'entrée R du flip-flop 10 dans le brevet US-A-4 772 840, et il est agencé de manière que le nombre N devienne égal à zéro en réponse à chaque passage de cette entrée 4m de l'état "0" à l'état "1". Comme on le verra plus loin, ce passage de l'entrée 4m de l'état "0" à l'état "1" se produit à la fin de chaque impulsion motrice.

Les sorties 4e à 4l du circuit de mesure 4 sont reliées aux entrées 5a à 5h d'un circuit de mémoire 5 et aux premières entrées 6a à 6h d'un circuit comparateur binaire 6.

Le nombre N défini ci-dessus est donc appliqué en permanence à ces entrées 5a à 5h du circuit de mémoire 5 et 6a à 6h du comparateur 6.

Le circuit de mémoire 5 comporte en outre une entrée de commande 5i et huit sorties 5j à 5q. Il est agencé de manière que ces sorties 5j à 5q prennent respectivement le même état logique que les entrées 5a à 5h lorsque l'entrée de commande 5i est à l'état logique "1", et que ces sorties 5j à 5q gardent leur état logique, indépendamment de toute variation de l'état logique des entrées 5a à 5h, lorsque l'entrée de commande 5i est à l'état logique "0". En d'autres termes, à chaque passage de l'entrée 5i de ce circuit 5 de l'état "0" à l'état "1", le nombre binaire formé par les états logiques de ses entrées 5a à 5h, qui est le nombre N, est transféré à ses sorties 5j à 5q.

Ce circuit de mémoire 5 ne sera pas décrit en détail ici car il est bien connu des spécialistes qui le désignent souvent par son nom anglais de "latch".

Les sorties 5j à 5q du circuit de mémoire 5 sont respectivement reliées aux deuxièmes entrées 6i à 6p du circuit comparateur numérique 6, qui comporte en outre une sortie 6q.

Ce circuit comparateur 6 ne sera pas non plus décrit en détail ici car il est bien connu des spécialistes. On mentionnera simplement que, dans ce cas particulier, sa sortie 6q n'est à l'état "1" que si le nombre binaire représenté par les états logiques de ses premières entrées 6a à 6h est plus petit que le nombre binaire représenté par les états logiques de ses deuxièmes entrées 6i à 6p.

Le dispositif de la figure 1 comporte encore une porte ET 7 dont la sortie 7a est reliée à l'entrée de commande 5i du circuit de mémoire 5. Les deux entrées de cette porte 7 sont respectivement reliées à la sortie 1a de l'oscillateur 1 et à la sortie 8a d'une porte OU exclusif 8.

Les entrées de cette porte 8 sont reliées, l'une directement et l'autre par l'intermédiaire de deux inverseurs 9 et 10, à la sortie 11a d'une porte OU inverse 11 dont les entrées sont respectivement reliées à la sortie 1a de l'oscillateur 1 et aux sorties 2b et 2c du circuit diviseur 2.

La sortie 8a de la porte 8 est en outre reliée à une entrée d'une porte ET 12 dont l'autre entrée est reliée à la sortie 1a de l'oscillateur 1 par l'intermédiaire d'un inverseur 13.

Enfin, la sortie 12a de cette porte 12 est reliée à une entrée d'une porte ET 14 dont l'autre entrée est reliée à la sortie 6q du comparateur 6 et dont la sortie 14a est reliée à l'entrée 3d du circuit formateur 3 et à l'entrée 4m du circuit de mesure 4.

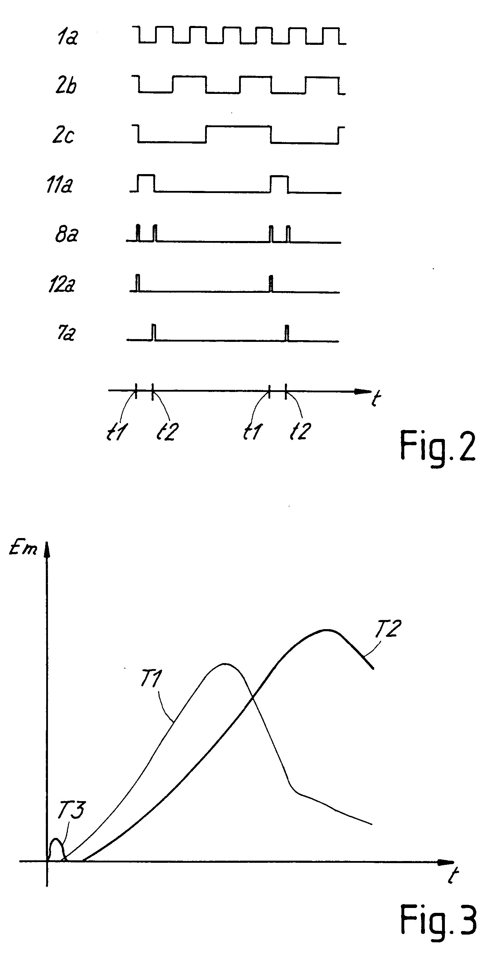

Le fonctionnement du dispositif de la figure 1 va être décrit ci-après à l'aide de la figure 2.

Dans cette figure 2, chaque diagramme est désigné par la même référence que le point de la figure 1 où est mesuré le signal qu'il représente.

En outre, dans la suite de cette description, chaque signal sera également désigné par la référence du point de la figure 1 où il est mesuré.

On voit facilement que les signaux 12a et 7a sont des signaux logiques périodiques ayant la même période que le signal 2c, et que ces signaux 12a et 7a sont formés d'impulsions très courtes pendant lesquelles ils sont à l'état "1", séparés par des intervalles pendant lesquels ces signaux 12a et 7a sont à l'état "0". Les impulsions du signal 12a sont produites chaque fois que le signal 2c passe de l'état "1" à l'état "0", c'est-à-dire à chacun des instants $t_1$ définis ci-dessus, alors que chaque impulsion du signal 7a est produite une demi-période du signal 1a plus tard, soit environ 15 microsecondes après chaque impulsion du signal 12a. Les instants où sont produites les impulsions du signal 7a seront appelés instants $t_2$ dans la suite de cette description.

Comme on l'a déjà mentionné, le nombre N présent aux sorties 4e à 4l du circuit de mesure 4 est égal à zéro entre deux impulsions motrices successives appliquées au moteur M par le circuit formateur 3. Il en est donc de même du nombre binaire présent aux sorties 5j à 5q du circuit de mémoire 5, puisque, à chaque instant $t_2$, ce nombre N est transféré sur ces sorties.

Toujours entre deux impulsions motrices, la sortie 6q du comparateur 6 reste donc à l'état "0" puisque les nombres binaires respectivement présents sur ses premières et ses deuxièmes entrées sont tous deux égaux à zéro. Il en découle que la sortie 14a de la porte 14 est également à l'état "0".

Lorsque le signal 2d passe de l'état "0" à l'état "1", le circuit formateur 3 commence à appliquer une impulsion motrice de forme adéquate au moteur M. Après un petit retard, le rotor de ce moteur M commence à tourner en réponse à cette impulsion motrice et donc à fournir de l'énergie mécanique au dispositif mécanique auquel il est relié.

A partir de l'instant où ce rotor commence à tourner, le nombre N prend une nouvelle valeur, plus grande que zéro, à chaque instant $t_1$.

On désignera par $t_{1i}$ et $t_{1j}$ deux instants $t_1$ consécutifs, par $t_{2i}$ et $t_{2j}$ les instants $t_2$ situés immédiatement après l'instant $t_{1i}$ et, respectivement, l'instant $t_{1j}$, et par $N_i$ et $N_j$ les valeurs prises par le nombre N à ces instants $t_{1i}$ et, respectivement, $t_{1j}$. On voit facilement que, à l'instant $t_{1j}$, le nombre $N_j$ est appliqué aux premières entrées 6a à 6h du comparateur 6, alors que c'est encore le nombre $N_i$ qui est appliqué aux deuxièmes entrées 6i à 6p de ce comparateur 6.

Si le nombre $N_j$ est plus grand que le nombre $N_i$, c'est-à-dire si la quantité d'énergie mécanique fournie par le moteur M a augmenté entre les instants $t_{1i}$ et $t_{1j}$, la sortie 6q du comparateur 6 reste à l'état "0". L'impulsion du signal 12a appliquée au même instant à la porte 14 n'a donc aucun effet, et la sortie 14a de cette porte 14 reste à l'état "0".

Ensuite, l'impulsion du signal 7a appliquée à l'instant $t_{2j}$ à l'entrée de commande 5i du circuit de mémoire 5 provoque le transfert du nombre $N_j$ aux sorties 5j à 5q de ce circuit 5. A partir de cet instant, et jusqu'à l'instant $t_1$ suivant, ce nombre $N_j$ est présent sur les premières et sur les deuxièmes entrées du comparateur 6, et la sortie 6q de ce dernier reste donc à l'état "0".

Ce processus se répète tant que, à chaque instant $t_{1j}$, le nombre $N_j$ est supérieur au nombre $N_i$, c'est-à-dire tant que la quantité d'énergie mécanique fournie par le moteur M augmente.

De manière bien connue, et comme cela est représenté à la figure 3, cette énergie mécanique passe par une valeur maximale à un instant qui dépend des caractéristiques électriques et magnétiques du moteur M et des caractéristiques mécaniques de la charge qu'il entraîne.

Dans cette figure 3, les courbes désignées par T1 et T2 représentent schématiquement la variation en fonction du temps t de l'énergie mécanique Em fournie par un moteur tel que le moteur M pendant une impulsion motrice ayant une durée relativement longue lorsque le couple résistant appliqué au rotor de ce moteur a respectivement une première valeur et une deuxième valeur supérieure à la précédente.

Après être passée par cette valeur maximale, cette énergie mécanique diminue, pour autant que l'impulsion motrice continue à être appliquée au moteur M. A un instant $T_{1j}$ situé juste après que cette énergie mécanique a passé par ce maximum, le nombre $N_j$ est donc inférieur au nombre $N_i$ qui est présent aux sorties 5j à 5q de la mémoire 5 depuis l'instant $t_{2i}$.

A cet instant $t_{1j}$, la sortie 6q du comparateur 6 passe donc à l'état "1" puisque le nombre binaire présent à ses premières entrées 6a à 6h est inférieur à celui qui est présent à ses deuxièmes entrées 6i à 6p. L'impulsion du signal 12a produite à ce même instant $t_{1j}$ provoque donc l'apparition d'une impulsion de même durée à la sortie 14a de la porte 14, à l'entrée 3d du circuit formateur 3 et à l'entrée 4m du circuit de mesure 4.

Cette impulsion provoque donc l'interruption de l'impulsion motrice en cours et la remise à zéro du nombre N présent aux sorties 4e à 4l du circuit de mesure 4.

Le dispositif de la figure 1 se retrouve donc dans le même état qu'avant le début de cette impulsion motrice, et il reste dans cet état jusqu'à ce que le signal 2d repasse de l'état "0" à l'état "1", c'est-à-dire jusqu'au début de l'impulsion motrice suivante, au cours de laquelle le processus décrit ci-dessus se répète.

Il faut noter que la valeur maximum atteinte par l'énergie mécanique fournie par le moteur M au cours d'une impulsion motrice ainsi que le temps mis par cette énergie mécanique pour atteindre ce maximum dépendent directement de la charge mécanique entraînée par ce moteur M pendant cette impulsion motrice. Cette charge mécanique étant généralement variable, cette valeur maximum et ce temps le sont également.

On voit que le dispositif de la figure 1 permet de régler la durée de chaque impulsion motrice appliquée au moteur M en fonction de la charge mécanique entraînée par ce moteur M pendant cette impulsion motrice, et cela d'une manière très sûre, sans qu'il soit nécessaire de prévoir un circuit permettant de détecter une non-rotation éventuelle du rotor en réponse à une impulsion motrice.

En effet, des considérations théoriques qui ne seront pas reproduites ici, mais qui sont confirmées par la pratique, montrent que, à l'instant où l'énergie mécanique fournie par le moteur M passe par sa valeur maximale, le rotor occupe une position angulaire située sensiblement à mi-chemin entre sa position d'équilibre instable et la position de repos qu'il doit atteindre. Dans cette position angulaire, le couple de positionnement appliqué au rotor tend à l'amener à sa position de repos finale. Ce couple de positionnement, qui a en outre, dans cette position, une valeur proche de sa valeur maximale, s'ajoute donc au couple dû à l'énergie cinétique de ce rotor. Il en résulte que ce rotor termine certainement sa rotation si l'impulsion motrice est interrompue à cet instant, et qu'il n'y a aucun risque que ce rotor continue alors sa rotation jusqu'à sa position de repos suivante ou revienne à sa position de départ.

En outre, le fonctionnement du dispositif de la figure 1 repose sur la comparaison de deux valeurs mesurées successivement par le même circuit de mesure, et non pas sur la comparaison d'une valeur mesurée avec une valeur de référence fournie par un circuit distinct du circuit de mesure. Ce dispositif peut donc être utilisé avec n'importe quel type de moteur sans qu'il soit nécessaire de déterminer préalablement une valeur de référence adaptée à ce type de moteur, et son fonctionnement est en outre indépendant des différences que présentent, d'un dispositif à l'autre, ses divers composants.

Il est évident que, pour une même charge mécanique entraînée par un moteur déterminé auquel est appliqué une impulsion motrice de même tension (dans le cas d'une impulsion à tension constante) ou de même courant (dans le cas d'une impulsion à courant constant), la durée de cette impulsion motrice et donc la quantité d'énergie électrique consommée par ce moteur pendant cette impulsion motrice sont plus élevées lorsqu'il est commandé par un dispositif tel que celui de la figure 1 que lorsqu'il est commandé par un dispositif tel que celui qui est décrit dans le brevet US-A-4 772 840 déjà mentionné.

Mais, lorsqu'on considère la consommation de ce moteur pendant une longue période, on constate que cette différence n'est pas très grande, grâce au fait que, lorsque ce moteur est commandé par le dispositif de la figure 1, il n'est presque jamais nécessaire de lui fournir d'impulsions de rattrapage, qui sont, dans un cas tel que celui qui est décrit dans ce brevet US-A-4 772 840, des impulsions pendant lesquelles la consommation du moteur est assez élevée.

On verra d'ailleurs plus loin qu'il est possible de diminuer la consommation d'énergie électrique d'un moteur pas à pas commandé par un dispositif tel que celui de la figure 1 pratiquement jusqu'à celle du même moteur commandé par un dispositif tel que celui qui est décrit dans le brevet US-A-4 772 840.

Il est bien connu que, indépendamment de la manière dont un moteur pas à pas est commandé, le couple moteur qu'il fournit et le couple résistant appliqué à son rotor varient pendant que ce rotor tourne en réponse à une impulsion motrice. Si pendant cette rotation, ce couple résistant devient égal ou supérieur à ce couple moteur, ce rotor peut s'arrêter. Dans un tel cas, l'énergie mécanique fournie par le moteur ne varie plus après cet arrêt et ne passe donc pas par une valeur maximale.

D'autre part, si ce couple résistant est élevé tout en restant en moyenne inférieur au couple moteur que le rotor peut fournir, ce dernier peut tourner à une vitesse relativement faible. Dans un tel cas, la croissance de l'énergie mécanique fournie par le moteur est très lente, et cette énergie mécanique atteint sa valeur maximale au bout d'un temps qui peut être de plusieurs dizaines de millisecondes, alors que dans des conditions normales ce temps est généralement inférieur à dix millisecondes.

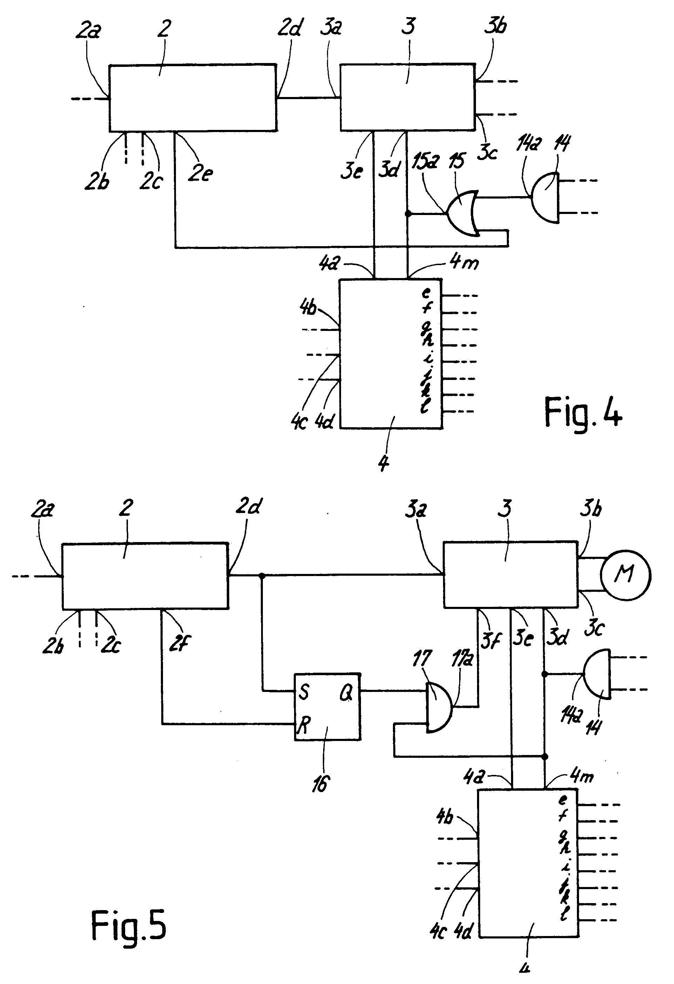

Pour éviter la consommation inutile d'énergie électrique qui se produit dans de tels cas, on peut modifier le dispositif de la figure 1 de la manière illustrée par la figure 4.

On voit que, dans le dispositif de cette figure 4, la liaison directe entre la sortie 14a de la porte 14 et les entrées 3d et 4m du circuit formateur 3 et du circuit de mesure 4 a été supprimée. Une porte OU 15 a été ajoutée et la sortie 15a de cette porte 15 a été reliée aux deux entrées 3d et 4m mentionnées ci-dessus. En outre, une des entrées de cette porte 15 a été reliée à la sortie 14a de la porte 14, et la deuxième entrée de cette porte 15 a été reliée à une sortie 2e du circuit diviseur 2. Le reste du dispositif de la figure 1 n'a subi aucune modification et n'a pas été représenté dans cette figure 4.

Dans cet example, le sortie 2e du diviseur 2 délivre un signal logique périodique ayant une fréquence de 32 Hz. Comme les autres signaux fournis par le diviseur 2, ce signal 2e est à l'état "0" pendant la moitié de sa période et à l'état "1" pendant l'autre moitié de cette période. En outre, à chaque instant où le signal 2d passe à l'état "1", c'est-à-dire à chaque instant où une impulsion motrice commence à être appliquée au moteur M par le circuit formateur 3, le signal 2e passe de l'état "1" à l'état "0". Comme la période de ce signal 2e est de 31,25 millisecondes, il repasse à l'état "1" 15,625 millisecondes après le début de chaque impulsion motrice.

A cet instant, la sortie 15a de la porte 15 passe donc également à l'état "1", ce qui a pour effet d'interrompre l'impulsion motrice en cours et de remettre le nombre N à zéro si cela n'a pas été déjà réalisé par l'impulsion produite par la sortie 14a de la porte 14 de la manière décrite ci-dessus.

On voit que dans cette forme d'exécution du dispositif selon la présente invention, une impulsion motrice ne peut pas durer plus de quinze millisecondes environ, même si le couple résistant qui est appliqué au rotor du moteur pendant cette impulsion motrice est très important.

Après qu'une impulsion motrice a été interrompue de la manière qui vient d'être décrite, il est possible que le rotor du moteur termine néanmoins son pas, soit que le couple résistant, bien qu'élevé, ne soit pas en moyenne supérieur au couple moteur, soit que la cause de l'augmentation de ce couple résistant ait disparu. Dans ces deux cas, il faut évidemment que ce rotor ait dépassé sa position d'équilibre instable à l'instant où l'impulsion motrice est interrompue.

En pratique, on constate cependant que cette dernière condition n'est souvent pas remplie, et que, après que l'impulsion motrice a été interrompue de cette dernière manière, le rotor du moteur retourne à sa position de départ dans la plupart des cas. L'impulsion motrice suivante a donc, dans un tel cas, la polarité inverse de celle qui correspond à la position du rotor, puisque deux impulsions motrices successives ont toujours des polarités inverses l'une de l'autre.

Cette impulsion motrice suivante provoque donc une faible rotation du rotor du moteur M, dans le sens opposé au sens désiré. Pendant une telle rotation, l'énergie mécanique fournie par le moteur est très faible, et elle atteint sa valeur maximale après un temps très court, inférieur à deux millisecondes environ. En outre, cette valeur maximale est généralement environ trois à dix fois inférieure à celle que cette énergie mécanique atteint lorsque le rotor tourne normalement en réponse à une impulsion motrice et que le couple résistant appliqué à ce rotor a sa valeur minimale.

L'énergie mécanique fournie par le moteur dans un tel cas est représentée par la courbe désignée par la référence T3 dans la figure 3.

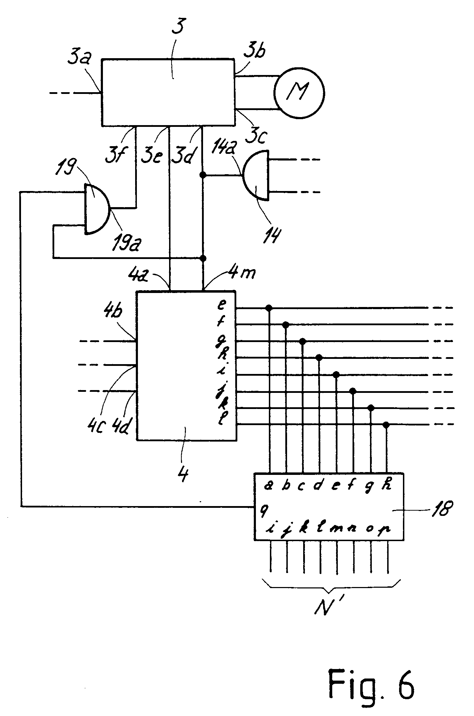

Les figures 5 et 6 représentent chacune un exemple de circuit qui peut être ajouté au dispositif de la figure 1 pour détecter une telle situation.

Le circuit de la figure 5 comporte une bascule bistable 16, de type R-S, dont les entrées S et R sont respectivement reliées à la sortie 2d du diviseur de fréquence 2 et à une sortie supplémentaire 2f de ce même diviseur 2.

La sortie Q de la bascule 16 est reliée à une première entrée d'une porte ET 17 dont la deuxième entrée est reliée à la sortie 14a de la porte 14, comme les entrées 3d et 4m du circuit formateur 3 et, respectivement, du circuit de mesure 4.

Le reste du dispositif est identique à celui de la figure 1 et n'a pas été représenté dans cette figure 5.

Dans cet example, la sortie 2f du diviseur 2 délivre un signal logique périodique ayant une fréquence de 256 Hz. Comme les autres signaux fournis par le diviseur 2, ce signal 2f est à l'état "0" pendant la moitié de sa période, soit pendant environ deux millisecondes, et à l'état "1" pendant l'autre moitié de cette période. En outre, à chaque instant où le signal 2d passe à l'état "1", c'est-à-dire au début de chaque impulsion motrice, ce signal 2f passe de l'état "1" à l'état "0". Il repasse donc à l'état "1" deux millisecondes environ après le début de chaque impulsion motrice.

On voit facilement que la sortie Q de la bascule 16 passe à l'état "1" au début de chaque impulsion motrice, repasse à l'état "0" deux millisecondes environ plus tard, et reste dans cet état "0" jusqu'au début de l'impulsion motrice suivante.

On voit également facilement que lorsque le rotor du moteur M occupe une position correcte au début d'un impulsion motrice, l'impulsion produite par la sortie 14a de la porte 14 à l'instant où l'énergie mécanique fournie par ce moteur M atteint sa valeur maximale est bloquée par la porte 17 puisque, dans ce cas, cette impulsion 14a est produite plus de deux millisecondes après le début de cette impulsion motrice et que la sortie Q de la bascule 16 est alors à l'état "0".

Par contre, lorsque le rotor du moteur M n'occupe pas la position correspondant à la polarité d'une impulsion motrice au début de celle-ci, l'impulsion produite par la sortie 14a de la porte 14 à l'instant où l'énergie mécanique fournie par ce moteur M passe par sa valeur maximale est transmise à la sortie 17a de la porte 17, puisque, dans ce cas, la sortie Q de la bascule 16 est encore à l'état "1" à cet instant. Cette impulsion apparaissant dans ce cas à cette sortie 17a de la porte 17 constitue donc un signal de détection indiquant que le rotor du moteur M n'occupe pas la position correspondant à la polarité de l'impulsion motrice en cours.

Le circuit de la figure 6 comporte un deuxième comparateur numérique, désigné par la référence 18, dont les premières entrées 18a à 18h sont respectivement reliées aux sorties 4e à 4l du circuit de mesure 4 et reçoivent donc le nombre binaire N défini ci-dessus.

Les deuxièmes entrées de ce comparateur 18, désignées par les références 18i à 18p, reçoivent en permanence un autre nombre binaire N', formé par les états logiques "0" ou "1" de ces entrées.

Ce nombre N' est fixe, et il est choisi de manière à être d'une part inférieur à la valeur maximale atteinte par le nombre N au cours d'une impulsion motrice lorsque le rotor du moteur M a, au début de cette impulsion, une position angulaire qui correspond à la polarité de celle-ci et que le couple résistant appliqué à ce rotor a sa valeur minimale et, d'autre part, supérieur à la valeur maximale atteinte par ce nombre N lorsque, au début d'une impulsion motrice, le rotor n'a pas la position correspondant à la polarité de celle-ci.

Comme la première valeur maximale mentionnée ci-dessus est de trois à dix fois supérieure à la deuxième, il est toujours possible de trouver un nombre N' satisfaisant à ces deux conditions.

Le comparateur 18 comporte en outre une sortie 18q, et il est agencé de manière que celle-ci soit à l'état logique "1" lorsque le nombre N est inférieur ou égal au nombre N', et à l'état logique "0" lorsque ce nombre N est supérieur à ce nombre N'.

Cette sortie 18q est reliée à une première entrée d'une porte ET 19 dont la deuxième entrée est reliée à la sortie 14a de la porte 14. La sortie 19a de cette porte 19 est reliée à l'entrée 3f du circuit formateur 3, qui est identique au circuit formateur 3 du circuit de la figure 5.

Le reste du dispositif est identique à celui de la figure 1 et n'a pas été représenté dans cette figure 6.

On voit facilement que si, au début d'une impulsion motrice, le rotor du moteur M a une position qui correspond à la polarité de cette impulsion, le nombre N atteint et dépasse la valeur du nombre N' avant d'atteindre sa valeur maximale.

Dans ce cas, la sortie 18q du comparateur 18 est donc à l'état logique "0" lorsque la sortie 14a de la porte 14 délivre, de la manière décrite ci-dessus, l'impulsion qui indique que l'énergie mécanique fournie par le moteur M a atteint son maximum. Cette impulsion est donc bloquée par la porte 19.

Par contre, lorsque le rotor du moteur M n'occupe pas la position correspondant à la polarité d'une impulsion motrice au début de celle-ci, le nombre N est encore inférieur au nombre N' à l'instant où il passe par sa valeur maximale. La sortie 18q du comparateur 18 est donc encore à l'état "1" à ce moment, et l'impulsion produite par la sortie 14a de la porte 14 est transmise à la sortie 19a de la porte 19. Cette impulsion apparaissant à cette sortie 19a de la porte 19 constitue donc également un signal de détection indiquant que le rotor du moteur M n'occupe pas la position correspondant à la polarité de l'impulsion motrice en cours. Ce signal est donc tout à fait équivalent à celui qui est fourni, de la manière décrite ci-dessus, par le circuit de la figure 5.

Quel que soit le circuit utilisé pour le fournir, ce signal de détection peut être, par example, utilisé par le circuit formateur 3, qui doit être alors évidemment agencé de manière adéquate, pour appliquer au moteur M une ou plusieurs impulsions motrices supplémentaires, dites impulsions de rattrapage, destinées à amener le rotor de ce moteur M dans une position correcte. C'est un tel cas qui a été représenté dans les figures 5 et 6, où la sortie 17a de la porte 17 et, respectivement, la sortie 19a de la porte 19, sont reliées à une entrée supplémentaire 3f du circuit formateur 3.

Un tel circuit formateur d'impulsions motrices ne sera pas décrit ici parce que sa constitution dépend de l'utilisation que l'on désire faire du signal de détection fourni par la sortie 17a de la porte 17 ou 19a de la porte 19, et parce que sa conception est à la portée de l'homme du métier. On mentionnera simplement qu'un exemple d'un tel circuit est décrit notamment dans le brevet US-A 4 507 599.

Il faut noter que, pendant les impulsions de rattrapage mentionnées ci-dessus, l'énergie mécanique fournie par le moteur peut très bien être mesurée, et que ces impulsions de rattrapage peuvent également être interrompues à l'instant où cette énergie mécanique passe par sa valeur maximale ou après qu'elles ont duré un certain temps prédéterminé, comme cela a été décrit ci-dessus dans le cas des impulsions motrices normales.

Il faut également noter que l'utilisation d'un circuit détecteur tel que celui de la figure 5 ou de la figure 6 permet de concevoir le circuit formateur 3 de manière que ce dernier puisse faire varier la tension appliquée à la bobine du moteur M ou le courant passant dans cette bobine en fonction de la production ou de la non-production du signal de détection décrit ci-dessus.

Ainsi, par exemple, le circuit formateur 3 peut être conçu de manière à diminuer progressivement et périodiquement la tension qu'il applique à la bobine du moteur M, ou le courant qu'il fait passer dans cette bobine, jusqu'à une valeur minimale prédéterminée ou jusqu'à ce que le circuit détecteur produise le signal indiquant que le moteur n'a pas fonctionné correctement en réponse à une impulsion motrice.

Ce circuit formateur 3 peut alors, toujours par exemple, fournir à la bobine du moteur M une impulsion de rattrapage pendant laquelle la tension appliquée à cette bobine, ou le courant circulant dans celle-ci, a une valeur élevée, prédéterminée, et recommencer ensuite à diminuer cette tension ou ce courant.

On arrive ainsi à diminuer la consommation d'énergie électrique du moteur M jusqu'à une valeur pratiquement égale à celle de la consommation du même moteur, entraînant la même charge mécanique, lorsque celui-ci est commandé de la manière décrite dans le brevet US-A-4 772 840 déjà mentionné.

## Revendications

1. Procédé de commande d'un moteur pas à pas (M) ayant une bobine et un rotor comprenant un aimant permanent couplé magnétiquement à ladite bobine, ledit procédé comportant l'application d'une impulsion motrice à ladite bobine chaque fois que ledit rotor doit tourner d'un pas et la mesure de la quantité d'énergie mécanique (Em) fournie par ledit moteur (M) pendant ladite impulsion motrice, ladite mesure étant basée sur une détermination de cette énergie mécanique (Em) à partir de valeurs de la tension et du courant appliqués à la bobine du moteur, caractérisé par le fait qu'il comporte en outre la détection, pendant chaque impulsion motrice, de l'instant où ladite quantité d'énergie mécanique (Em) passe par une valeur maximale et commence à diminuer, et l'interruption de ladite impulsion motrice audit instant.

2. Procédé selon la revendication 1, caractérisé par le fait que ladite détection comporte la production d'un premier (12a) et d'un deuxième signal périodique (7a) ayant la même fréquence et déterminant respectivement une pluralité de premiers instants (t1) et une pluralité de deuxièmes instants (t2) distincts desdits premiers instants (t1), la mémorisation de la valeur de ladite énergie mécanique (Em) à chacun desdits deuxièmes instants (t2), et la comparaison, à chacun desdits premiers instants (t1), de la valeur de ladite énergie mécanique (Em) avec la valeur de l'énergie mécanique (Em) mémorisée au deuxième instant (t2) immédiatement précédent.

3. Procédé selon la revendication 1, caractérisé par le fait qu'il comporte en outre l'interruption de ladite impulsion motrice lorsque ladite énergie mécanique (Em) n'a pas atteint une valeur maximale à un instant séparé du début de ladite impulsion motrice par une durée déterminée.

4. Dispositif de commande d'un moteur pas à pas (M) ayant une bobine et un rotor comprenant un aimant permanent couplé magnétiquement à ladite bobine, ledit dispositif comportant des moyens (3) pour appliquer une impulsion motrice à ladite bobine chaque fois que ledit rotor doit tourner d'un pas et des moyens (4) pour mesurer l'énergie mécanique (Em) fournie par ledit moteur (M) pendant ladite impulsion motrice, ladite mesure étant basée sur une détermination de cette énergie mécanique (Em) à partir de valeurs de la tension et du courant appliqués à la bobine du moteur, caractérisé par le fait qu'il comporte en outre des moyens de détection (5 à 14) pour produire, pendant chaque impulsion motrice, un signal de détection à l'instant où ladite énergie mécanique (Em) passe par une valeur maximale et commence à diminuer, et des moyens répondant audit signal de détection pour interrompre ladite impulsion motrice audit instant.

5. Dispositif selon la revendication 4, caractérisé par le fait que lesdits moyens de détection (5 à 14) comportent des moyens (7 à 13) pour produire un premier (12a) et un deuxième signal périodique (7a) ayant la même fréquence et déterminant respectivement une pluralité de premiers instants (t1) et une pluralité de deuxièmes instants (t2) distincts desdits premiers instants (t1), des moyens (5) répondant audit deuxième signal (7a) pour mémoriser la valeur de ladite énergie mécanique (Em) à chacun desdits deuxièmes instants (t2), et des moyens (6,14) répondant audit premier signal (12a) pour comparer à chacun desdits premiers instants (t1) la valeur de ladite énergie mécanique (Em) avec la valeur de l'énergie mécanique (Em) mémorisée au deuxième instant (t2) immédiatement précédent.

6. Dispositif selon la revendication 4, caractérisé par le fait qu'il comporte en outre des moyens (16,17,18,19) pour produire un signal de sécurité lorsque ladite énergie mécanique (Em) n'a pas atteint une valeur maximale à un instant séparé du début de ladite impulsion motrice par une durée déterminée, et que lesdits moyens pour interrompre l'impulsion motrice sont agencés de manière à interrompre ladite impulsion motrice en réponse audit signal de sécurité.

**Patentansprüche**

1. Verfahren zum Steuern eines Schrittmotors (M) mit einer Spule und einem Rotor, der einen mit der Spule magnetisch gekoppelten Permanentmagneten enthält, welches Verfahren das Anlegen eines Antriebsimpulses an die Spule jedesmal dann umfaßt, wenn der Rotor um einen Schritt drehen muß und die Messung der Größe der mechanischen Energie (Em) umfaßt, geliefert von dem Motor (M) während des Antriebsimpulses, welche Messung auf einer Bestimmung dieser mechanischen Energie (Em), ausgehend von Werten der Spannung und des Stromes, angelegt an die Motorspule, basiert, dadurch gekennzeichnet, daß es ferner die Erfassung, während jedes Antriebsimpulses, des Zeitpunktes umfaßt, wo die Größe der mechanischen Energie (Em) einen Maximalwert durchläuft und abzunehmen beginnt, sowie die Unterbrechung des Antriebsimpulses zu diesem Zeitpunkt umfaßt.

2. Verfahren nach Anspruch 1, dadurch gekennzeichnet, daß die Erfassung die Erzeugung eines ersten (12a) und eines zweiten (7a) periodischen Signals umfasst die die gleiche Frequenz aufweisen und jeweils eine Mehrzahl von ersten Zeitpunkten (t1) bzw. eine Mehrzahl von zweiten Zeitpunkten (t2), abweichend von den ersten Zeitpunkten (t1), bestimmen, die Abspeicherung des Wertes der mechanischen Energie (Em) an jedem der zweiten Zeitpunkte (t2) umfaßt und den Vergleich, an jedem der ersten Zeitpunkte (t1) des Wertes der mechanischen Energie (Em) mit dem Wert der mechanischen Energie (Em), der bei dem unmittelbar vorangehenden zweiten Zeitpunkt (t2) abgespeichert worden war, umfaßt.

3. Verfahren nach Anspruch 1, dadurch gekennzeichnet, daß es ferner die Unterbrechung des Antriebsimpulses umfaßt, wenn die mechanische Energie (Em) nicht einen Maximalwert zu einem Zeitpunkt erreicht hat, der vom Beginn des Antriebsimpulses um eine vorbestimmte Dauer getrennt ist.

4. Vorrichtung zum Steuern eines Schrittmotors (M) mit einer Spule und einem Rotor, der einen mit der Spule magnetisch gekoppelten Permanentmagneten enthält, welche Vorrichtung Mittel (3) umfaßt zum Anlegen eines Antriebsimpulses an die Spule jedesmal dann, wenn der Rotor um einen Schritt drehen muß, und Mittel (4) umfaßt zum Messen der mechanischen Energie (Em), die von dem Motor (M) während jedes Antriebsimpulses geliefert wird, welche Messung auf einer Bestimmung dieser mechanischen Energie (Em), ausgehend von Werten der Spannung und des Stromes, angelegt an die Spule des Motors, basiert, dadurch gekennzeichnet, daß sie ferner Erfassungsmittel (5 bis 14) umfaßt zum Erzeugen, während jedes Antriebsimpulses, eines Erfassungssignals zum Zeitpunkt, wo die mechanische Energie (Em) einen Maximalwert durchläuft und abzunehmen beginnt, und Mittel umfaßt, die auf das Erfassungssignal reagieren zum Unterbrechen des Antriebsimpulses zu diesem Zeitpunkt.

5. Vorrichtung nach Anspruch 4, dadurch gekennzeichnet, daß die Erfassungsmittel (5 bis 14) Mittel (7 bis 13) umfassen zum Erzeugen eines ersten (12a) und eines zweiten (7a) periodischen Signals die die gleicher Frequenz aufweisen und jeweils eine Mehrzahl von ersten Zeitpunkten (t1) bzw. eine Mehrzahl von zweiten Zeitpunkten (t2), abweichend von den ersten Zeitpunkten (t1), bestimmen, Mittel (5), die auf das zweite Signal (7a) reagieren zum Abspeichern des Wertes der mechanischen Energie (Em) an jedem der zweiten Zeitpunkte (t2) und Mittel (6, 14), die auf das erste Signal (12a) reagieren zum Vergleichen zu jedem der ersten Zeitpunkte (t1) des Wertes der mechanischen Energie (Em) mit dem Wert der mechanischen Energie (Em), der bei dem unmittelbar vorhergehenden zweiten Zeitpunkt (t2) abgespeichert worden war.

6. Vorrichtung nach Anspruch 4, dadurch gekennzeichnet, daß sie ferner Mittel (16, 17, 18, 19) umfasst zum Erzeugen eines Sicherheitssignals, wenn die mechanische Energie (Em) einen Maximalwert zu einem Zeitpunkt nicht erreicht hat, der vom Beginn des Antriebsimpulses durch eine vorbestimmte Dauer getrennt ist, und daß die Mittel zum Unterbrechen des Antriebsimpulses derart ausgebildet sind, daß sie den Antriebsimpuls in Reaktion auf das Sicherheitssignal unterbrechen.

**Claims**

1. Method of controlling a stepping motor (M) having a coil and a rotor comprising a permanent magnet magnetically coupled to said coil, said method comprising applying a drive pulse to said coil each time said rotor has to turn by one step and measuring the quantity of mechanical energy (Em) supplied by said motor (M) during said drive pulse, said measuring being based on a determination of this mechanical energy (Em) from values of the voltage and the current applied to the motor coil, characterized by the fact that it further comprises detecting, during each drive pulse, the instant when said quantity of mechanical energy (Em) passes through a maximum value and begins to decrease, and interrupting said drive pulse at said instant.

2. Method according to claim 1, characterized by the fact that said detecting comprises producing a first (12a) and a second periodic signal (7a) of the same frequency and respectively determining a plurality of first instants (t1) and a plurality of second instants (t2) distinct from said first instants (t1), memorizing the value of said mechanical energy (Em) at each of said second instants (t2), and comparing, at each of said first instants (t1), the value of said mechanical energy (Em) with the value of the mechanical energy (Em) memorized at the immediately preceding second instant (t2).

3. Method according to claim 1, characterized by the fact that it further comprises interrupting said drive pulse when said mechanical energy (Em) has not reached a maximum value at an instant separated from the beginning of said drive pulse by a given time period.

4. Device for controlling a stepping motor (M) having a coil and a rotor comprising a permanent magnet magnetically coupled to said coil, said device comprising means (3) for applying a drive pulse to said coil each time said rotor has to turn by one step and means (4) for measuring the mechanical energy (Em) supplied by said motor (M) during said drive pulse, said measuring being based on a determination of this mechanical energy (Em) from values of the voltage and the current applied to the motor coil, characterized by the fact that it further comprises detecting means (5 to 14) for producing, during each drive pulse, a detection signal at the instant when said mechanical energy (Em) passes through a maximum value and begins to decrease, and means responsive to said detection signal for interrupting said drive pulse at said instant.

5. Device according to claim 4, characterized by the fact that said detecting means (5 to 14) comprise means (7 to 13) for producing a first (12a) and a second periodic signal (7a) of the same frequency and respectively determining a plurality of first instants (t1) and a plurality of second instants (t2) distinct from said first instants (t1), means (5) responsive to said second signal (7a) for memorizing the value of said mechanical energy (Em) at each of said second instants (t2), and means (6, 14) responsive to said first signal (12a) for comparing at each of said first instants (t1) the value of said mechanical energy (Em) with the value of the mechanical energy (Em) memorized at the immediately preceding second instant (t2).

6. Device according to claim 4, characterized by the fact that it further comprises means (16, 17, 18, 19) for producing a safety signal when said mechanical energy (Em) has not reached a maximum value at an instant separated from the beginning of said drive pulse by a given time period, and that said means for interrupting the drive pulse are arranged so as to interrupt said drive pulse in response to said safety signal.

Fig.1

Fig.2

Fig.3

Fig. 4

Fig.5

Fig. 6

16